(19) Europäisches Patentamt

European Patent Office

Office européen des brevets

(11) **EP 1 429 510 B1**

(12) **FASCICULE DE BREVET EUROPEEN**

(45) Date de publication et mention
de la délivrance du brevet:
**05.04.2006 Bulletin 2006/14**

(51) Int Cl.:
*H04L 27/38* *(2006.01)*    *H04L 25/06* *(2006.01)*

(21) Numéro de dépôt: **03300266.8**

(22) Date de dépôt: **12.12.2003**

(54) **Décodage de signaux à faible complexité émis par une modulation à constellation**

Dekodierung mit niedriger Komplexität von Signalen ausgesendet durch eine Konstellationsmodulation

Low complexity decoding of signals emitted through a constellation modulation

(84) Etats contractants désignés:
**DE FR GB IT**

(30) Priorité: **13.12.2002 FR 0215834**

(43) Date de publication de la demande:
**16.06.2004 Bulletin 2004/25**

(73) Titulaire: **STMicroelectronics S.A.**
**92120 Montrouge (FR)**

(72) Inventeurs:
• **Da-Silva-Valente, Helder**
  **38000 Grenoble (FR)**

• **Lehmann, Frédéric**
  **San Diego, CA 92103 (US)**

(74) Mandataire: **de Beaumont, Michel**
**1bis, rue Champollion**
**38000 Grenoble (FR)**

(56) Documents cités:
**EP-A- 1 195 908**    **EP-A- 1 246 419**
**EP-A- 1 294 152**    **US-A1- 2002 131 515**

EP 1 429 510 B1

**Description**

La présente invention concerne un procédé et un dispositif de décodage de signaux transmis selon une modulation mettant en oeuvre une constellation.

Un exemple de modulation mettant en oeuvre une constellation est la modulation d'amplitude en quadrature qui consiste à transmettre simultanément deux composantes modulées en amplitude ayant une différence de phase de 90 degrés. Un signal modulé $s_n$, transmis pendant une durée T, a donc la forme suivante :

$$s(t) = a*\sin(2\pi ft)+b*\cos(2\pi ft) \qquad (1)$$

où les amplitudes a, b, constantes pendant la durée de transmission T, sont choisies parmi des couples de valeurs possibles. Chaque paire (a, b) peut être représentée dans un repère cartésien par un point P dont l'abscisse I, ou composante en phase, correspond à la donnée a, et l'ordonnée Q, ou composante en quadrature, correspond à la donnée b. L'expression constellation correspond à la représentation de tous les points P possibles à l'émission dans un repère orthonormé.

Selon le procédé de codage utilisé, le nombre de couples (a, b) possibles, ou nombre d'états $n_{states}$, est plus ou moins important. Chaque point P peut être associé à une donnée numérique contenant un nombre de bits $n_{bits}$ qui dépend du nombre d'états $n_{states}$ autorisés selon la relation suivante :

$$n_{bits} = Ent(\log_2(n_{states})) \qquad (2)$$

où Ent est la fonction partie entière.

A titre d'exemple, lorsque $n_{states}$ est égal à 64, la modulation est appelée modulation QAM 64 et $n_{bits}$ est égal à 6. Les amplitudes maximales des composantes I et Q étant nécessairement bornées, le nombre de bits $n_{bits}$ des données numériques associées aux points P dépend de la distance minimale acceptable séparant les uns des autres les points P de la constellation. En pratique, plus la distance minimale est grande, plus le procédé de codage est robuste au bruit. Le nombre de bits $n_{bits}$ pouvant être associé à un symbole QAM dépend donc alors essentiellement du niveau de bruit présent sur le canal de communication utilisé pour la transmission des signaux s.

A chaque point de la constellation est attribuée une étiquette variant de 0 à $n_{states}$-1 qui correspond à une donnée numérique à $n_{bits}$ bits. Une telle opération est appelée étiquetage (labeling). La fonction qui permet de transformer une donnée numérique à $n_{bits}$ bits en composantes I et Q du point de la constellation associé est appelée fonction de mise en correspondance (mapping). Le choix de la fonction de mise en correspondance permet d'augmenter l'efficacité spectrale, c'est-à-dire le nombre de bits transmis par unité de temps et par bande de fréquence. Un signal reçu s' correspond à un signal émis s perturbé par le bruit présent sur le canal de communication utilisé pour la transmission du signal.

Le procédé de décodage consiste, à partir du signal reçu s', à déterminer deux composantes $I_{rec}$ et $Q_{rec}$ de façon à placer un point reçu $P_{rec}$ sur la représentation de la constellation. En raison du bruit présent sur le canal de communication, le point $P_{rec}$ ne correspond généralement pas exactement au point de la constellation émis.

Une étape générale du procédé de décodage appelée en anglais "hard demapping" consiste alors à déterminer, au vu du point reçu $P_{rec}$, quel est le point de la constellation, ou point de référence $P_{ref}$, correspondant au signal émis avec la plus forte probabilité. Une telle étape consiste à déterminer le point de la constellation le plus proche du point reçu $P_{rec}$ selon la distance euclidienne. La donnée numérique associée au point de référence est appelée donnée de référence.

La seule étape précédente du décodage ne permet pas d'associer au point de référence $P_{ref}$ une information relative aux perturbations ayant pu affecter le signal reçu s'. C'est pourquoi les procédés de décodage actuels comportent généralement une étape supplémentaire, appelée en anglais "soft demapping", qui consiste, par exemple, à fournir pour chaque signal reçu s' une donnée de décodage correspondant à une suite de valeurs signées, par exemple du type (-5 ; -1,2 ; 9,2 ; -0,2). Le signe + ou - d'une valeur signée à un rang déterminé dans la suite de valeurs signées représente la valeur 0 ou 1 du bit de même rang de la donnée de référence. Chaque valeur absolue d'une valeur signée à un rang déterminé représente une information relative aux perturbations ayant pu affecter le signal reçu pour le bit de même rang de la donnée de référence. Les valeurs signées sont également appelées bits souples (en anglais soft bits). Les bits souples apportent plus d'information que la simple donnée de référence issue de l'étape de "hard demapping". De nombreux procédés de décodage utilisent les bits souples en entrée. Il peut s'agir de procédés itératifs du type turbocodes (convolutifs et de produit), soft-Viterbi, code de parité à densité faible (Low Density Parity Code). De tels procédés sont également appelés procédés à entrées douces et sorties douces ou procédés SISO (Soft Input Soft Output).

La détermination d'une donnée de décodage requiert donc le calcul d'une valeur signée pour chaque bit de la donnée de référence. Un tel calcul suppose que le bruit du canal de communication est connu et peut, par exemple, être modélisé par un bruit gaussien blanc additif (AWGN). La valeur signée associée au bit de rang j, appelé bit$_j$, de la donnée de référence est obtenue par le rapport LLR$_j$ appelé en anglais "Log Likelyhood Ratio" qui s'exprime de la façon suivante :

$$LLR_j = \ln \frac{P_1(bit_j = 1/s')}{P_0(bit_j = 0/s')} \qquad (2)$$

où $P_j(bit_j=1/s')$ correspond à la probabilité que le bit bit$_j$ de la donnée numérique associée au signal reçu s' soit égal à 1 au vu du signal reçu s', et $P_0(bit_j=0/s')$ correspond à la probabilité que le bit bit$_j$ de la donnée numérique associée au signal reçu s' soit égal à 0 au vu du signal reçu s'. En théorie, les calculs des probabilités $P_1$, $P_0$ doivent être réalisés pour tous les points de la constellation. Toutefois, pour réduire la durée de calcul et réduire la complexité du circuit mettant en oeuvre le calcul (par exemple un circuit intégré), une bonne approximation du rapport LLR$_j$ peut être obtenue en utilisant seulement deux points de la constellation, plus précisément les points qui apportent les plus grandes contributions aux probabilités $P_1$ et $P_0$. Pour chaque bit de rang j considéré, on appelle point concurrent $P_{conc}^j$, le point de la constellation le plus proche du point reçu $P_{rec}$ et pour lequel le bit de rang j de la donnée numérique a une valeur opposée au bit de même rang de la donnée de référence. En nommant $\sigma^2$ la variance du bruit gaussien du canal de communication, en considérant que les probabilités $P_1$ et $P_0$ suivent chacune une distribution normale, le rapport LLR$_j$ peut être exprimé de la façon suivante :

$$|LLR_j| = \frac{\left\| P_{rec} - P_{conc}^j \right\|^2 - \left\| P_{rec} - P_{ref} \right\|^2}{2\sigma^2} \qquad (3)$$

$$= \frac{\left[ (I_{rec} - I_{conc}^j)^2 + (Q_{rec} - Q_{conc}^j)^2 \right] - \left[ (I_{rec} - I_{ref})^2 + (Q_{rec} - Q_{ref})^2 \right]}{2\sigma^2}$$

$$sign(LLR_j) = 2P_{ref}^j - 1 \qquad (4)$$

où sign est une fonction égale à +1 lorsque le rapport LLR$_j$ est positif et égale à -1 lorsque le rapport LLR$_j$ est négatif, $I_{rec}$, $I_{ref}$ et $I_{conc}^j$ sont les composantes I respectivement des points $P_{rec}$, $P_{ref}$ et $P_{conc}^j$, et $Q_{rec}$, $Q_{ref}$ et $Q_{conc}^j$ sont les composantes Q des points $P_{rec}$, $P_{ref}$ et $P_{conc}^j$ et $P_{ref}^j$ la valeur du bit de rang j du point $P_{ref}$.

La détermination du point concurrent $P_{conc}^j$ pour un bit bit$_j$ est généralement obtenue en calculant la distance séparant le point reçu $P_{rec}$ de chaque point concurrent possible $P_{conc}^j$ pour lequel le bit de rang j de la donnée numérique associée au point concurrent $P_{conc}^j$ a une valeur opposée au bit de rang j de la donnée de référence et en choisissant le point pour lequel la distance calculée est minimale.

Pour un point de référence $P_{ref}$ donné, globalement n$_{states}$ -1 distances sont calculées. La détermination de la suite de valeurs signées de la donnée de décodage nécessite donc un temps de calcul important qui peut être préjudiciable, notamment lorsque le procédé de décodage est réalisé en temps réel. En outre, comme pour l'étape de détermination du point de référence $P_{ref}$, les étapes de détermination des points concurrents $P_{conc}^j$ nécessitent que les coordonnées I et Q de tous les points de la constellation soient mémorisées et accessibles.

Le document US 2002/0131515 décrit un procédé pour réduire les calculs lors du décodage d'un signal modulé à M états de phase et codé par convolution dans un système de radiocommunication.

La présente invention vise à obtenir un procédé de décodage de signaux transmis selon une modulation d'amplitude en quadrature pour laquelle la détermination des points concurrents peut être mise en oeuvre avec un faible temps de calcul et une faible complexité du circuit réalisant la détermination des points concurrents.

La présente invention vise également à réduire la quantité de données devant être stockées pour la détermination de points concurrents.

Pour atteindre ces objets, la présente invention prévoit un procédé de décodage d'un signal bruité fourni à partir des coordonnées d'un point d'une constellation de points, chaque point de la constellation étant associé à une donnée numérique d'un nombre de bits déterminé, consistant à déterminer à partir du signal bruité des composantes d'un point reçu ; déterminer un point de référence associé à une donnée numérique de référence et correspondant au point de la constellation le plus proche du point reçu ; déterminer au moins un point concurrent correspondant au point de la constellation le plus proche du point de référence associé à une donnée numérique dont un bit de rang déterminé a une valeur logique opposée au bit de rang déterminé de la donnée de référence ; et déterminer, au moins pour le bit de la donnée numérique de référence audit rang déterminé, une donnée de précision à partir du point reçu, du point de référence et du point concurrent, dans lequel la détermination des bits de la donnée numérique associée au point concurrent est réalisée à partir des valeurs de certains des bits de la donnée numérique de référence et dudit rang.

Selon un mode de réalisation de la présente invention, les points de la constellation pour lesquels les bits des données numériques associées au rang déterminé ont une valeur logique déterminée sont répartis en au moins un ensemble de points juxtaposés symétriques par rapport à l'un ou l'autre de deux axes de référence (X, Y) de la constellation.

Selon un mode de réalisation de la présente invention, pour des rangs successifs, les points de la constellation pour lesquels les bits des données numériques associées auxdits rangs successifs ont une valeur logique déterminée sont répartis en au moins un ensemble de points juxtaposés symétriques par rapport à un même axe de référence (X, Y) de la constellation.

Selon un mode de réalisation de la présente invention, la constellation est une constellation de Gray.

Selon un mode de réalisation de la présente invention, la constellation est une constellation quasi de Gray.

Selon un mode de réalisation de la présente invention, le signal bruité est fourni par une modulation d'amplitude en quadrature.

La présente invention prévoit également un dispositif de décodage comprenant un moyen de réception d'un signal bruité fourni à partir des coordonnées d'un point d'une constellation de points, chaque point de la constellation étant associé à une donnée numérique d'un nombre de bits déterminé ; un moyen pour déterminer à partir du signal bruité des composantes d'un point reçu ; un moyen pour déterminer un point de référence associé à une donnée numérique de référence et correspondant au point de la constellation le plus proche du point reçu ; un moyen pour déterminer au moins un point concurrent correspondant au point de la constellation le plus proche du point de référence associé à une donnée numérique dont un bit à un rang déterminé a une valeur logique opposée au bit au même rang déterminé de la donnée de référence ; et un moyen pour déterminer, au moins pour le bit de la donnée numérique de référence au rang déterminé, une donnée de précision à partir du point reçu, du point de référence et du point concurrent, dans lequel le moyen pour déterminer le au moins un point concurrent comprend un moyen pour déterminer des bits de la donnée numérique associée au point concurrent à partir des valeurs de certains des bits de la donnée numérique de référence et du rang déterminé.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 représente un exemple de constellation QAM 64 ;
les figures 2A à 2F représentent chacune la répartition des valeurs de l'un des $n_{bits}$ bits des données numériques associées aux points de la constellation de la figure 1 ;
les figures 3A à 3F, analogues aux figures 2A à 2F, illustrent un exemple de détermination d'un point concurrent pour un premier bit déterminé ;
les figures 4A à 4F, analogues aux figures 2A à 2F, illustrent un exemple de détermination d'un point concurrent pour un second bit déterminé ; et
les figures 5A à 5G représentent chacune la répartition des valeurs de l'un des $n_{bits}$ bits des données numériques associées aux points d'un exemple de constellation Q128.

La présente invention consiste à utiliser les propriétés de symétrie inhérente à l'étiquetage des constellations habituellement utilisées pour le codage par modulation d'amplitude en quadrature de façon à déterminer rapidement

les points concurrents $\mathbf{P}^{j}_{conc}$ à partir d'un point de référence $P_{ref}$ déterminé lors de l'étape de "hard demapping" et associé à un signal reçu, pour le calcul des rapports $LLR_j$ lors du décodage du signal.

La présente invention va être décrite en détail dans le cas d'une constellation de Gray pour laquelle, pour chaque point non périphérique de la constellation, la donnée numérique associée audit point ne comporte qu'un seul bit ayant une valeur différente par rapport aux données numériques associées aux quatre points de la constellation les plus proches du point considéré (c'est-à-dire par rapport aux points situés au nord, au sud, à l'est et à l'ouest du point considéré). L'utilisation d'une constellation de Gray améliore de façon générale la robustesse au bruit d'un procédé de codage. Le nombre de bits codés associés à un point d'une constellation de Gray est nécessairement pair.

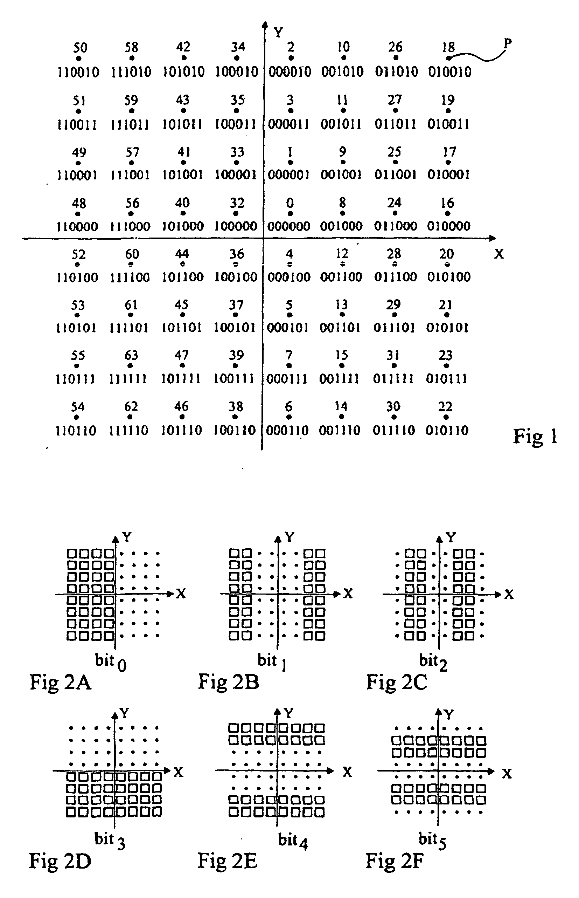

La figure 1 représente dans un repère orthonormé d'axes (X,Y) un exemple de constellation de Gray à 64 états ($n_{states}$=64) permettant donc le codage de données numériques de 6 bits ($n_{bits}$=6). Les points P de la constellation sont répartis sur 8 lignes et 8 colonnes. Pour chaque point de la constellation, on a indiqué au-dessus dudit point l'étiquette associée et au-dessous dudit point la donnée numérique de $n_{bits}$ ainsi étiquetée.

Les figures 2A à 2F représentent chacune, dans le repère (X,Y), la répartition des valeurs 1 et 0 d'un des bits, $bit_0$ à $bit_5$, des données numériques associées aux points de la constellation de Gray de la figure 1. Les carrés représentent des valeurs logiques 1 et les points des valeurs logiques 0. Les références $bit_0$ et $bit_5$ correspondent respectivement aux bits le plus significatif et le moins significatif. La mise en correspondance choisie de données numériques et de points de la constellation de Gray de la figure 1 est telle que les trois bits les plus significatifs $bit_0$, $bit_1$, $bit_2$ des données numériques peuvent être associés aux composantes I des points de la constellation et les trois bits les moins significatifs $bit_3$, $bit_4$, $bit_5$ peuvent être associés aux composantes Q. Les trois bits les plus significatifs $bit_0$, $bit_1$, $bit_2$ d'une donnée numérique sont appelés bits de la composante I et les trois bits les moins significatifs $bit_3$, $bit_4$, $bit_5$ sont appelés bits de la composante Q.

Les figures 2A à 2F mettent en évidence les symétries particulières de la constellation de Gray de la figure 1. Par exemple, pour la figure 2A associée au bit le plus significatif $bit_0$, les valeurs logiques 1 sont réparties sur la moitié gauche de la constellation et les valeurs logiques 0 sont réparties sur la moitié droite de la constellation. Pour la figure 2B associée au bit $bit_1$ qui suit le bit le plus significatif, les valeurs logiques 0 sont réparties sur les quatre colonnes centrales et les valeurs logiques 1 sont réparties sur les deux colonnes restantes à gauche et les deux colonnes restantes à droite.

La présente invention consiste à utiliser les propriétés de symétrie des figures 2A à 2F pour déterminer de façon rapide et simple, à partir d'un point de référence $P_{ref}$, le point concurrent $\mathbf{P}^{j}_{conc}$ associé à chaque bit de la donnée de référence. Le procédé selon l'invention sera décrit en détail pour la constellation de Gray de la figure 1 et sera ensuite généralisé à d'autres types de constellation.

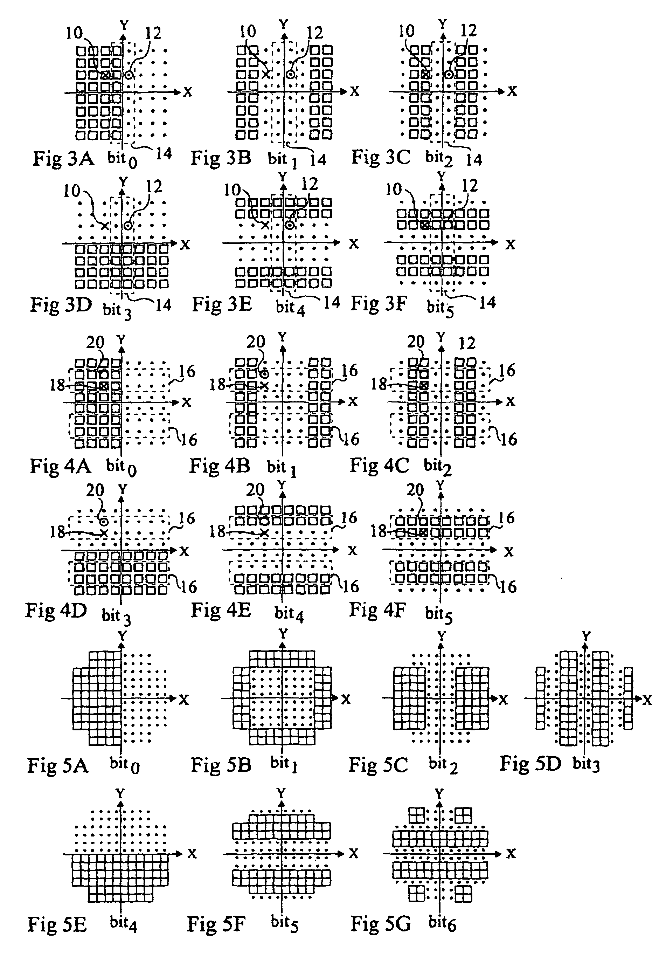

A titre d'exemple, on considère qu'à un point reçu $P_{rec}$ correspond le point de référence $P_{ref}$ dont l'étiquette est 41 et auquel est associée la donnée de référence 101001. Sur les figures 3A à 3F et 4A à 4F, la position du point de référence $P_{ref}$ est représentée par une croix 10.

Les figures 3A à 3F reproduisent les figures 2A à 2F tout en illustrant le procédé de détermination du point concurrent $\mathbf{P}^{0}_{conc}$ associé au bit $bit_0$, c'est-à-dire le bit le plus significatif de la composante I de la donnée de référence. Dans le présent exemple, le bit $bit_0$ est égal à 1. Déterminer le point concurrent $\mathbf{P}^{0}_{conc}$ consiste, dans le présent exemple, à déterminer le point de la constellation pour lequel la donnée numérique associée comporte un bit de rang 0 égal à 0 et qui est le plus proche du point de référence $P_{ref}$. A partir de la figure 3A, le point concurrent $\mathbf{P}^{\hat{0}}_{conc}$ est facilement identifié et sa position est indiquée par un cercle 12. De façon plus générale, il apparaît que, quelque soit la valeur du bit $bit_0$ de la donnée de référence, le point concurrent $\mathbf{P}^{0}_{conc}$ correspondant sera nécessairement situé sur l'une des deux colonnes centrales délimitées, en figure 3A, par un rectangle en pointillé 14.

Le point concurrent $\mathbf{P}^{0}_{conc}$ est reproduit par un cercle 12 sur les figures 3B à 3F. Ceci permet d'obtenir directement les valeurs des autres bits de la donnée numérique associée au point concurrent $\mathbf{P}^{0}_{conc}$ ou donnée concurrente. Les autres bits $bit_1$, $bit_2$ de la composante I du point concurrent $\mathbf{P}^{0}_{conc}$ sont donc égaux à 0. Les valeurs des bits $bit_3$, $bit_4$, $bit_5$ de la composante Q du point concurrent $\mathbf{P}^{0}_{conc}$ sont identiques à celles de la composante Q du point de référence $P_{ref}$.

Les figures 4A à 4F illustrent la détermination du point concurrent $P_{conc}^4$ associé au bit bit$_4$ de la donnée de référence. Dans le présent exemple, le bit bit$_4$ est égal à 0. Le bit de rang 4 de la donnée concurrente est donc égal à 1. En figure 4E, deux rectangles 16 en pointillé indiquent les positions possibles du point concurrent $P_{conc}^4$ quelle que soit la position du point de référence P$_{ref}$. La position du point de référence P$_{ref}$ est représentée par une croix 18 et la position du point concurrent $P_{conc}^4$ est représentée par un cercle 20. En reportant les rectangles 16 en pointillés sur les figures 4A à 4D et 4F et en utilisant les symétries de la constellation de Gray, on déduit que la valeur du bit bit$_3$ de la composante Q du point $P_{conc}^4$ est identique à celle du bit bit$_3$ de la composante Q du point de référence P$_{ref}$. Le bit bit$_5$ le moins significatif de la donnée concurrente est égal à 1. Les valeurs des bits bit$_0$, bit$_1$, bit$_2$ de la composante I du point concurrent $P_{conc}^4$ sont égales aux bits bit$_0$, bit$_1$, bit$_2$ de la composante I du point de référence P$_{ref}$.

Le présent exemple permet de formuler les règles générales suivantes pour la détermination des valeurs des bits de la donnée binaire associée au point concurrent $P_{conc}^j$ correspondant au bit bit$_j$ à partir d'une donnée de référence pour une constellation de Gray ayant un nombre de bits pairs quelconque et pour laquelle les figures de répartition des valeurs de bits sont analogues aux figures 2A à 2F.

1) Le bit bit$_j$ est un bit de la composante I du point concurrent $P_{conc}^j$ :

- le bit bit$_j$ est opposé au bit bit$_j$ de la donnée de référence ;

- tous les bits de la composante Q du point concurrent $P_{conc}^j$ sont égaux aux bits de la composante Q du point de référence P$_{ref}$ ;

- si le bit bit$_j$ est le bit le plus significatif de la composante I du point concurrent $P_{conc}^j$, les autres bits de la composante I sont égaux à 0 ;

- si le bit bit$_j$ n'est pas le bit le plus significatif de la composante I du point concurrent $P_{conc}^j$, les bits de la composante I du point concurrent $P_{conc}^j$ allant du bit le plus significatif de la composante I au bit précédent le bit bit$_j$ sont égaux aux bits correspondants de la composante I du point de référence P$_{ref}$, le bit de la composante I du point concurrent $P_{conc}^j$ suivant le bit bit$_j$ est égal à 1 et les autres bits de la composante I du point concurrent $P_{conc}^j$ sont égaux à 0.

2) Le bit bit$_j$ est un bit de la composante Q du point concurrent $P_{conc}^j$ :

- le bit bit$_j$ est opposé au bit bit$_j$ de la donnée de référence ;

- tous les bits de la composante I du point concurrent $P_{conc}^j$ sont égaux aux bits de la composante I du point de référence P$_{ref}$ ;

- si le bit bit$_j$ est le bit le plus significatif de la composante Q du point concurrent $P_{conc}^j$, les autres bits de la composante Q sont égaux à 0 ;

- si le bit bit$_j$ n'est pas le bit le plus significatif de la composante Q du point concurrent $P_{conc}^j$, alors les bits de la composante Q du point concurrent $P_{conc}^j$ allant du bit le plus significatif de la composante Q au bit précédent le bit bit$_j$ sont égaux aux bits correspondants de la composante Q du point de référence P$_{ref}$, le bit de la composante Q du point concurrent $P_{conc}^j$ suivant le bit bit$_j$ est égal à 1 et les autres bits de la composante Q du point concurrent $P_{conc}^j$ sont égaux à 0

A partir de la donnée numérique concurrente, les composantes $I_{conc}^j$ et $Q_{conc}^j$ peuvent être immédiatement déterminées et utilisées pour le calcul du rapport LLR$_j$, par exemple à partir de la fonction de mise en correspondance utilisée pour l'émission ou à partir d'une table où sont stockées pour chaque donnée numérique les composantes du point associé de la constellation.

La présente invention permet donc pour chaque bit de la donnée de référence de déterminer simplement les points concurrents associés sans nécessiter de calcul de distances. Le présent procédé ne requiert pas l'accès aux composants des points de la constellation. Il peut donc facilement être mis en oeuvre par un circuit dédié.

Il apparaît que pour tout type de constellation de Gray, il est possible de formuler des règles pour déterminer les points concurrents $P_{conc}^j$ qui soient similaires aux règles précédentes et dont l'énoncé précis dépend du type de constellation.

Une autre possibilité consiste à transformer une constellation de Gray quelconque en une constellation pour laquelle les règles précédemment énoncées sont directement applicables. En effet, une propriété particulière des constellations de Gray est que, quelle que soit la manière dont a été effectuée la mise en correspondance des données numériques et des points de la constellation, il est toujours possible de transformer la constellation en une constellation similaire à celle de la figure 1 en réalisant, pour chaque donnée numérique associée à un point de la constellation, une ou plusieurs permutations entre des bits de rangs déterminés, et/ou une ou plusieurs inversions de la valeur de bits de rangs déterminés. Ceci revient à réaliser une permutation des figures 2A à 2F ou une inversion des valeurs logiques représentées sur l'une des figures 2A à 2F ou plusieurs d'entre elles.

La présente invention peut être mise en oeuvre pour des constellations autres que des constellations de Gray. Il peut s'agir, par exemple, d'une constellation quasi de Gray pour laquelle le nombre de bits n$_{bits}$ est impair. Dans une constellation quasi de Gray, certains points particuliers ont au moins un point voisin avec une donnée numérique associée ayant plus d'un bit de valeur différente. Les figures 5A à 5G représentent des figures analogues aux figures 2A à 2G pour un exemple de constellation quasi de Gray QAM128. Il apparaît clairement sur les figures 5A à 5G que la constellation quasi de Gray peut être divisée en sous-zones présentant les mêmes propriétés de symétrie que la constellation de Gray QAM64. On peut donc facilement énoncer des règles de calcul des points concurrents $P_{conc}^j$ analogues aux règles précédemment énoncées en séparant des cas distincts selon la position du point de référence. Dans certains cas, pour les constellations quasi de Gray, les règles de calcul des points concurrents donnent deux points concurrents possibles. Pour lever de telles ambiguïtés, on peut alors calculer les distances entre les points concurrents possibles et le point reçu P$_{rec}$. Le point concurrent conservé est celui pour lequel la distance calculée est minimale.

De façon générale, on peut montrer qu'une constellation quasi de Gray quelconque peut être transformée en une constellation quasi de Gray particulière pour laquelle la répartition des valeurs de bits des données numériques associées aux points de la constellation ont des propriétés de symétrie analogues à celles des figures 5A à 5G.

De façon analogue, la présente invention peut être appliquée à tout type de constellation pour lequel les répartitions des valeurs de bits de la constellation présentent des propriétés de symétrie remarquables. En outre, la présente invention peut s'appliquer à toute constellation qui, par un jeu de permutations et/ou d'inversions des bits des données numériques associées aux points de la constellation, peut être transformée en une constellation ayant des propriétés de symétrie remarquables.

Bien entendu, la présente invention est susceptible de diverses variantes et modifications qui apparaîtront à l'homme de l'art en restant dans la portée des revendications. En particulier, les étapes de décodage précédemment décrites peuvent être réalisées avec d'autres opérations de décodage lorsque le signal transmis a été en outre codé selon des techniques de codage particulières. De plus, des opérations de correction d'erreurs peuvent également être effectuées en parallèle des étapes de décodage précédemment décrites, En outre, la présente invention a été décrite dans le cadre d'une constellation utilisée par une modulation en quadrature de phase. Il est clair que la présente invention peut s'appliquer à tout type de modulation mettant en oeuvre une constellation.

**Revendications**

1. Procédé de décodage d'un signal bruité fourni à partir des coordonnées d'un point d'une constellation de points, chaque point de la constellation étant associé à une donnée numérique d'un membre de bits déterminé, comportant les étapes suivantes :

déterminer à partir du signal bruité des composantes d'un point reçu ;

déterminer un point de référence associé à une donnée numérique de référence et correspondant au point de la constellation le plus proche du point reçu ;

déterminer au moins un point concurrent correspondant au point de la constellation le plus proche du point de référence associé à une donnée numérique dont un bit de rang déterminé a une valeur logique opposée au bit de rang déterminé de la donnée de référence ; et

déterminer, au moins pour le bit de la donnée numérique de référence audit rang déterminé, une donnée de précision à partir du point reçu, du point de référence et du point concurrent,

**caractérisé en ce que** la détermination des bits de la donnée numérique associée au point concurrent est réalisée à partir des valeurs de certains des bits de la donnée numérique de référence et dudit rang.

2. Procédé selon la revendication 1, dans lequel, pour chaque rang déterminé, les points de la constellation pour lesquels les bits des données numériques associées au rang déterminé ont une valeur logique déterminée sont répartis en au moins un ensemble de points juxtaposés symétriques par rapport à l'un ou l'autre de deux axes de référence (X, Y) de la constellation.

3. Procédé selon la revendication 1, dans lequel pour des rangs successifs, les points de la constellation pour lesquels les bits des données numériques associées auxdits rangs successifs ont une valeur logique déterminée sont répartis en au moins un ensemble de points juxtaposés symétriques par rapport à un même axe de référence (X, Y) de la constellation.

4. Procédé selon la revendication 1, dans lequel la constellation est une constellation de Gray.

5. Procédé selon la revendication 1, dans lequel la constellation est une constellation quasi de Gray.

6. Procédé selon la revendication 1, dans lequel le signal bruité est fourni par une modulation d'amplitude en quadrature.

7. Dispositif de décodage comprenant :

un moyen de réception d'un signal bruité fourni à partir des coordonnées d'un point d'une constellation de points, chaque point de la constellation étant associé à une donnée numérique d'un nombre de bits déterminé ;

un moyen pour déterminer à partir du signal bruité des composantes d'un point reçu ;

un moyen pour déterminer un point de référence associé à une donnée numérique de référence et correspondant au point de la constellation le plus proche du point reçu ;

un moyen pour déterminer au moins un point concurrent correspondant au point de la constellation le plus proche du point de référence associé à une donnée numérique dont un bit à un rang déterminé a une valeur logique opposée au bit au même rang déterminé de la donnée de référence ; et

un moyen pour déterminer, au moins pour le bit de la donnée numérique de référence au rang déterminé, une donnée de précision à partir du point reçu, du point de référence et du point concurrent,

**caractérisé en ce que** le moyen pour déterminer le au moins un point concurrent comprend un moyen pour déterminer des bits de la donnée numérique associée au point concurrent à partir des valeurs de certains des bits de la donnée numérique de référence et du rang déterminé.

**Claims**

1. A method for decoding a noisy signal provided from the coordinates of a point in a point constellation, each constellation point being associated with a digital data item of a determined number of bits, comprising the steps of:

determining, based on the noisy signal, components of a received point;

determining a reference point associated with a digital reference data item and corresponding to the constellation point closest to the received point;

determining at least one concurrent point corresponding to the constellation point closest to the reference point associated with a digital data item, having a bit of determined rank with a logic value opposite to the bit of determined rank of the reference data; and

determining, at least for the bit of the reference digital data at said determined rank, a precision data item based on the received point, the reference point, and the concurrent point,

**characterized in that** the determination of the bits of the digital data associated with the concurrent point is performed based on the values of some of the bits of the reference digital data and on said rank.

2. The method of claim 1, wherein the constellation points for which the bits of the digital data associated with the determined rank have a determined logic value are distributed in at least one set of juxtaposed points symmetrical with respect to one of two reference axes (X, Y) of the constellation.

3. The method of claim 1, wherein for successive ranks, the constellation points for which the bits of the digital data associated with said successive ranks have a determined logic value are distributed in at least one set of juxtaposed points symmetrical with respect to a same reference axis (X, Y) of the constellation.

4. The method of claim 1, wherein the constellation is a Gray constellation.

5. The method of claim 1, wherein the constellation is a quasi-Gray constellation.

6. The method of claim 1, wherein the noisy signal is provided by a quadrature amplitude modulation.

7. A decoding device comprising:

    means for receiving a noisy signal provided from the coordinates of a point of a point constellation, each point in the constellation being associated with a digital data item of a determined number of bits;
    means for determining based on the noisy signal components of a received point;
    means for determining a reference point associated with a reference digital data item and corresponding to the constellation point closest to the received point;
    means for determining at least one concurrent point corresponding to the constellation point closest to the reference point associated with a digital data item, having a bit at a determined rank with a logic value opposite to the bit at the same determined rank of the reference data; and
    means for determining, at least for the bit of the reference digital data at the determined rank, a precision data item based on the received point, on the reference point, and on the concurrent point

    **characterized in that** the means for determining the at least one concurrent point comprise means for determining bits of the digital data associated with the concurrent point based on the values of some of the bits of the reference digital data and on the determined rank.

## Patentansprüche

1. Verfahren zum Dekodieren eines auf der Grundlage der Koordinaten eines Punkts einer Punktekonstellation gelieferten rauschbehafteten Signals, wobei jeweils jeder Punkt der Konstellation einem digitalen Datum bestimmter Bitzahl zugeordnet ist, wobei das Verfahren die folgenden Schritte umfaßt:

    Bestimmen, auf der Grundlage des und ausgehend von dem rauschbehafteten Signal(s), der Komponenten eines empfangenen Punktes (Empfangspunkts);
    Bestimmen eines Bezugs- bzw. Referenzpunktes, der einem digitalen Bezugs- bzw. Referenzdatum zugeordnet ist und dem Punkt der Konstellation entspricht, welcher dem Empfangspunkt am nächsten liegt;
    Bestimmen wenigstens eines konkurrenten Punkts (Konkurrentpunkts) entsprechend dem Punkt der Konstellation, welcher dem Referenzpunkt am nächsten liegt, der einem digitalen Datum zugeordnet ist, von dem ein Bit bestimmten Rangs einen zu dem Bit bestimmten Rangs des Referenzdatums entgegengesetzten logischen Wert besitzt; und
    ausgehend von dem Empfangspunkt, dem Referenzpunkt und dem Konkurrentpunkt wird wenigstens für das Bit des digitalen Referenzdatums mit dem genannten bestimmten Rang ein Präzisionsdatum bestimmt;

    **dadurch gekennzeichnet, daß** die Bestimmung der Bits des dem Konkurrentpunkt zugeordneten digitalen Datums auf der Grundlage der Werte von gewissen der Bits des Referenzdatums und des genannten Rang erfolgt.

2. Verfahren nach Anspruch 1, bei welchem für jeden bestimmten Rang die Punkte der Konstellation, für welche die Bits der dem bestimmten Rang zugeordneten digitalen Daten einen bestimmten logischen Wert besitzen, in wenigstens einer Gruppe von Punkten einander gegenüberliegend symmetrisch bezüglich einer von zwei Bezugsachsen (X, Y) der Konstellation verteilt sind

3. Verfahren nach Anspruch 1, bei welchem für aufeinander folgende Ränge die Punkte der Konstellation, für welche die Bits der den genannten aufeinanderfolgenden Rängen zugeordneten digitalen Daten einen bestimmten logischen Wert besitzen, in wenigstens einer Gruppe von Punkten nebeneinander bzw gegenüberliegend symmetrisch bezüglich einer selben Bezugsachse (X, Y) der Konstellation verteilt sind

4. Verfahren nach Anspruch 1, bei welchem die Konstellation eine GRAY- Konstellation ist.

5. Verfahren nach Anspruch 1, bei welchem die Konstellation eine quasi-GRAY Konstellation ist.

6. Verfahren nach Anspruch 1, bei welchem das rauschbehaftete Signal durch eine Amplitudenmodulation in (Phasen-) Quadratur geliefert wird

7. Dekodiervorrichtung, welche umfaßt:

ein Mittel zum Empang eines rauschbehafteten Signals, das auf der Grundlage der und ausgehend von den Koordinaten eines Punkts einer Konstellation von Punkten geliefert wird, wobei jeder Punkt der Konstellation einem digitalen Datum einer bestimmten Bitzahl zugeordnet ist;
ein Mittel zum Bestimmen von Komponenten eines Empfangspunktes auf der Grundlage des rauschbehafteten Signals zu bestimmen;
ein Mittel zum Bestimmen eines Bezugs- bzw Referenzpunktes, der einem digitalen Referenzdatum zugeordnet ist und dem Punkt der Konstellation zugeordnet ist, der dem Empfängspunkt am nächsten kommt;
ein Mittel zum Bestimmen wenigstens eines konkurrenten Punktes (Konkurrentpunktes), welcher demjenigen Punkt der Konstellation entspricht, der dem Referenzpunkt am nächsten liegt, welcher einem digitalen Datum zugeordnet ist, von dem ein Bit bestimmten Rangs einen logischen Wert besitzt, welcher dem Bit vom selben bestimmten Rang des Referenzdatums entgegengesetzt ist; sowie
ein Mittel, um wenigstens für das Bit des digitalen Referenzdatums bei dem bestimmten Rang ein Präzisionsdatum auf der Grundlage des Empfangspunkts, des Referenzpunkts und des Konkurrentpunkts zu bestimmen,

**dadurch gekennzeichnet, daß** das Mittel zum Bestimmen des wenigstens einen Konkurrentpunkts ein Mittel umfaßt zum Bestimmen der Bits des dem Konkurrentpunkt zugeordneten digitalen Datums, auf der Grundlage der Werte gewisser von den Bits des Referenzdatums und des bestimmten Rangs.

| 50 | 58 | 42 | 34 | Y 2 | 10 | 26 | 18 ⌐ P |
|---|---|---|---|---|---|---|---|
| 110010 | 111010 | 101010 | 100010 | 000010 | 001010 | 011010 | 010010 |
| 51 | 59 | 43 | 35 | 3 | 11 | 27 | 19 |
| 110011 | 111011 | 101011 | 100011 | 000011 | 001011 | 011011 | 010011 |
| 49 | 57 | 41 | 33 | 1 | 9 | 25 | 17 |
| 110001 | 111001 | 101001 | 100001 | 000001 | 001001 | 011001 | 010001 |
| 48 | 56 | 40 | 32 | 0 | 8 | 24 | 16 |
| 110000 | 111000 | 101000 | 100000 | 000000 | 001000 | 011000 | 010000 |

X

| 52 | 60 | 44 | 36 | 4 | 12 | 28 | 20 |
|---|---|---|---|---|---|---|---|
| 110100 | 111100 | 101100 | 100100 | 000100 | 001100 | 011100 | 010100 |
| 53 | 61 | 45 | 37 | 5 | 13 | 29 | 21 |
| 110101 | 111101 | 101101 | 100101 | 000101 | 001101 | 011101 | 010101 |
| 55 | 63 | 47 | 39 | 7 | 15 | 31 | 23 |
| 110111 | 111111 | 101111 | 100111 | 000111 | 001111 | 011111 | 010111 |
| 54 | 62 | 46 | 38 | 6 | 14 | 30 | 22 |
| 110110 | 111110 | 101110 | 100110 | 000110 | 001110 | 011110 | 010110 |

Fig 1

$bit_0$

Fig 2A

$bit_1$

Fig 2B

$bit_2$

Fig 2C

$bit_3$

Fig 2D

$bit_4$

Fig 2E

$bit_5$

Fig 2F

Fig 3A bit$_0$    Fig 3B bit$_1$    Fig 3C bit$_2$

Fig 3D bit$_3$    Fig 3E bit$_4$    Fig 3F bit$_5$

Fig 4A bit$_0$    Fig 4B bit$_1$    Fig 4C bit$_2$

Fig 4D bit$_3$    Fig 4E bit$_4$    Fig 4F bit$_5$

Fig 5A bit$_0$    Fig 5B bit$_1$    Fig 5C bit$_2$    Fig 5D bit$_3$

Fig 5E bit$_4$    Fig 5F bit$_5$    Fig 5G bit$_6$